Europäisches Patentamt

European Patent Office

Office européen des brevets

(19)

(11) Numéro de publication : **0 025 735**
**B1**

# FASCICULE DE BREVET EUROPÉEN

(45) Date de publication du fascicule du brevet :
**09.03.83**

(51) Int. Cl.³ : **F 28 F   7/02**

(21) Numéro de dépôt : **80401207.8**

(22) Date de dépôt : **22.08.80**

(54) **Procédé d'obturation sélective des extrémités d'un module alvéolaire.**

(30) Priorité : **28.08.79 FR 7921542**

(43) Date de publication de la demande :
**25.03.81 Bulletin 81/12**

(45) Mention de la délivrance du brevet :
**09.03.83 Bulletin 83/10**

(84) Etats contractants désignés :
**BE DE FR GB IT NL**

(56) Documents cités :
**FR A 2 149 458**
**US A 3 467 511**
**US A 3 885 942**
**US A 3 926 251**
**US A 4 041 592**
**US A 4 066 120**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Schnedecker; Guy**
**38, rue Ginoux**
**F-75015 Paris (FR)**

(74) Mandataire : **Mongrédien, André et al**
**c/o BREVATOME 25, rue de Ponthieu**
**F-75008 Paris (FR)**

Procédé d'obturation sélective des extrémités d'un module alvéolaire.

L'invention concerne un procédé d'obturation sélective d'au moins une extrémité d'un module alvéolaire.

De nombreuses réalisations industrielles mettent en œuvre des modules alvéolaires comprenant des rangées de canaux parallèles dans lesquels circulent au moins deux fluides différents. On rencontre notamment des installations de ce type dans les échangeurs de chaleur.

Quelle que soit leur application, les modules alvéolaires de ce type ont en commun qu'ils véhiculent des fluides différents dans des canaux voisins, de telle sorte que la séparation de ces fluides nécessite l'obturation sélective des extrémités du module. Cette obturation sélective a pour effet d'obturer à une extrémité les canaux dans lesquels circule l'un des fluides tout en autorisant le passage d'un autre fluide circulant dans d'autres canaux par des orifices ménagés dans le module à proximité de cette extrémité.

Différentes solutions à ce problème ont déjà été proposées, mais ces solutions mettent généralement en œuvre des procédés complexes consistant par exemple à relier des tubes parallèles et espacés, définissant des rangées de canaux, par des cloisons de longueur inférieure, de façon à définir entre ces cloisons et les parois extérieures des tubes d'autres rangées de canaux débouchant latéralement au niveau des extrémités plus courtes des cloisons. La complexité de ces solutions les rend coûteuses et peu fiables, et la présente invention a principalement pour objet de permettre la réalisation de modules comparables au moyen d'un procédé sensiblement plus simple et plus sûr.

Par ailleurs, on connaît du brevet US-A-4 041 592 un procédé de fabrication d'un dispositif d'échange de chaleur pour un moteur à turbine à gaz, dans lequel certaines conduites débouchant à leurs extrémités alors que les autres conduites débouchent latéralement. Ces dernières conduites sont obtenues en réalisant des encoches aux extrémités des rangées correspondantes et en les obturant en partie en déposant un matériau étanche. Ce procédé présente toutefois l'inconvénient de ne pas permettre une obturation rapide et contrôlée du module.

Ainsi, conformément à l'invention, il est proposé un procédé d'obturation sélective d'au moins une extrémité d'un module alvéolaire comprenant des rangées de canaux parallèles destinées à véhiculer au moins deux fluides différents, comprenant :

— une étape permettant de laisser libre l'accès aux rangées de canaux véhiculant un premier desdits fluides, et

— une étape de dépôt d'un matériau étanche sur au moins une partie de l'extrémité du module, caractérisé en ce que le matériau étanche est déposé par projection liquide pulsée, définissant des périodes de projection courtes entrecoupées de périodes de refroidissement plus longues, l'angle de projection du matériau étanche étant compris entre 18° et 30° par rapport à la direction définie par les canaux.

Selon une première variante de réalisation, l'accès aux rangées de canaux véhiculant le premier fluide est ménagé en réalisant des encoches dans les parties de l'extrémité du module correspondant à ces rangées avant de déposer le matériau étanche, ces encoches débouchant sur les parois latérales du module de telle sorte que l'accès latéral aux canaux véhiculant le premier fluide est laissé libre alors que les autres canaux sont obturés par le matériau étanche.

Selon une deuxième variante de réalisation, l'accès aux rangées de canaux véhiculant le premier fluide est ménagé en éliminant par usinage, et notamment par électroérosion ou au moyen d'un laser, la couche de matériau étanche déposée sur ces rangées de canaux.

Selon une troisième variante de réalisation, l'accès aux rangées de canaux véhiculant le premier fluide est ménagé en empêchant le dépôt du matériau étanche sur ladite partie frontale en plaçant des caches devant ces rangées de canaux.

Il est clair qu'un tel procédé permet de réaliser très simplement l'obturation sélective souhaitée. Dans la première variante, la profondeur des encoches peut même être modulée selon la dimension des ouvertures latérales exigées par l'utilisation envisagée. La projection liquide utilisée, encore appelée « shoopage », peut être réalisée notamment au moyen d'un chalumeau oxyacétylénique. La projection inclinée du matériau étanche est essentielle. En effet, elle permet, dans la première variante, de limiter au maximum la pénétration du matériau étanche dans l'encoche et de maintenir la profondeur de celle-ci à une valeur convenable. En outre, les risques d'obturation et de bris des parois sont ainsi diminués car les chocs mécaniques dus à la projection sont limités. De même, la projection pulsée permet en permanence lors du refroidissement l'élimination des calories apportées lors de la projection. Ceci permet d'éviter les problèmes dus aux coefficients de dilatation différents du module et du matériau projeté.

Conformément à un mode de réalisation préféré de la première variante de l'invention, la largeur des encoches est sensiblement égale à la largeur intérieure des canaux. Les encoches peuvent être réalisées par usinage au moyen d'un outil approprié de largeur inférieure à la largeur interne des canaux correspondants. De préférence, les canaux sont de section carrée ou rectangulaire.

Le matériau étanche permettant d'obturer l'extrémité du module peut être choisi parmi le groupe comprenant les oxydes métalliques tels que l'alumine, les métaux tels que l'aluminium ou le nickel, et les mélanges de ces matériaux.

De même, le module peut être réalisé en un matériau choisi parmi le groupe comprenant les matériaux minéraux frittés ou non, et notamment les céramiques tels que l'alumine et la cordiérite, et les métaux tels que le nickel.

On décrira maintenant, à titre d'exemple non limitatif, un mode de réalisation particulier de l'invention en se référant aux dessins annexés dans lesquels :

la figure 1 est une vue en perspective éclatée représentant un module alvéolaire dont une extrémité a été obturée sélectivement conformément à une première variante du procédé selon l'invention ;

la figure 2 est une vue en perspective représentant schématiquement l'étape de dépôt d'un matériau étanche sur l'extrémité du module, le dépôt étant effectué par projection liquide de ce matériau, et

la figure 3 est une vue en coupe représentant à plus grande échelle l'extrémité du module après dépôt du matériau étanche.

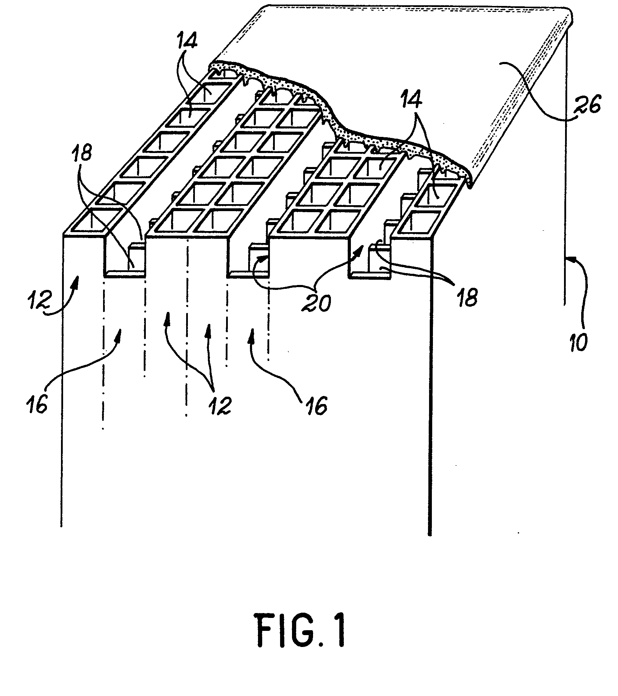

Le module alvéolaire représenté sur la figure 1, désigné par la référence générale 10, comprend des rangées 12 de canaux parallèles 14 dans lesquels circule un premier fluide et des rangées 16 de canaux parallèles 18 dans lesquels circule un second fluide. Les canaux 14 et 18 sont tous parallèles entre eux et s'étendent longitudinalement dans le module 10, de telle sorte qu'ils débouchent à chacune des extrémités de ce dernier avant l'obturation sélective de ces extrémités.

Comme l'illustre la figure 1, les canaux 14 et 18 sont de préférence de section carrée ou rectangulaire, de telle sorte qu'ils sont séparés par des cloisons planes. A titre d'illustration, on notera que les côtés de canaux de section carrée peuvent mesurer 2 à 3 mm, alors que l'épaisseur des cloisons séparant les canaux peut varier entre 100 et 200 μ.

Le matériau constituant le module 10 est choisi en fonction des différentes exigences requises pour son utilisation, telles qu'une bonne résistance à la corrosion lorsque les fluides circulant dans les canaux sont particulièrement agressifs, et éventuellement, en fonction des contraintes mécaniques et thermiques qu'il devra subir au cours de l'obturation des extrémités du module. Dans cet esprit, les matériaux pouvant constituer le module 10 sont généralement choisis parmi les matériaux minéraux, frittés ou non, et plus particulièrement les céramiques telles que l'alumine ou la cordiérite (silico aluminate de magnésium) et parmi les métaux tels que le nickel. Bien entendu, ce matériau devra être poreux ou étanche selon qu'il est destiné à séparer ou à filtrer un fluide ou, au contraire à assurer un échange calorifique entre deux fluides.

Conformément à une première variante de réalisation du procédé selon l'invention, des encoches 20 sont d'abord réalisées dans les parties de l'extrémité du module 10 correspondant aux rangées de canaux 16 dans l'exemple représenté sur la figure 1. Ces encoches sont réalisées, de préférence par usinage au moyen d'un outil dont l'épaisseur est inférieure d'environ 2/10 mm à la largeur intérieure des canaux. Un tel outil peut être constitué, par exemple, par une meule diamantée ou par une scie à fil. Les encoches 20 peuvent également être réalisées par ultrasons.

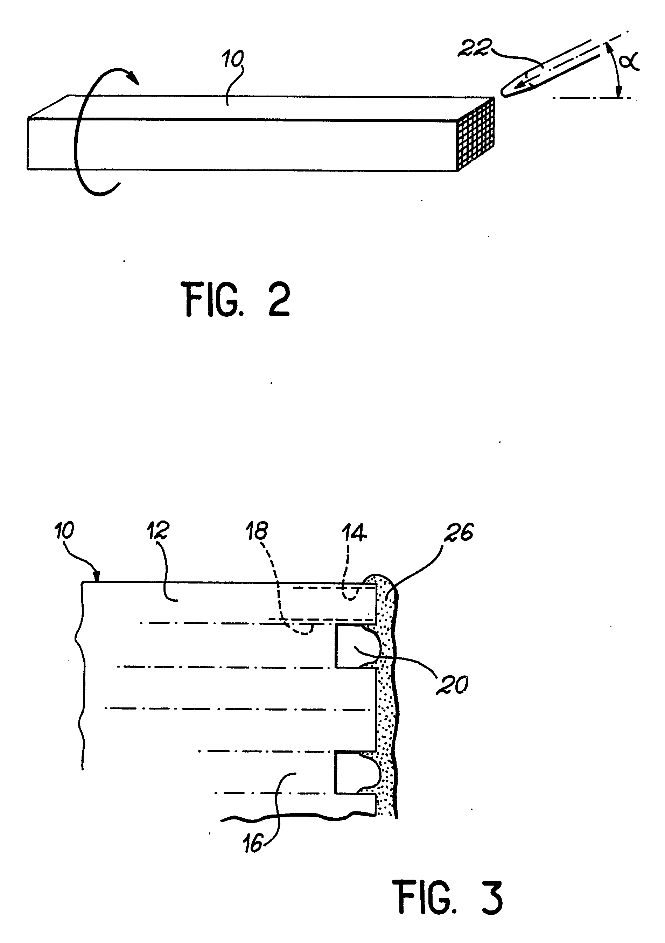

Les encoches 20 permettent de sélectionner les canaux qui ne seront pas obturés au cours de l'étape d'obturation par projection liquide, encore appelée « shoopage », illustrée sur la figure 2.

Au cours de l'étape d'obturation proprement dite, le module 10 est entraîné en rotation à une vitesse voisine, par exemple, de 200 tours/minute et un matériau d'obturation étanche est projeté au moyen d'un pistolet de projection 22 sur l'extrémité à obturer du module 10.

Le matériau étanche projeté par le pistolet 22 est choisi selon la nature du matériau constituant le module 10 et doit satisfaire simultanément aux conditions requises pour permettre de réaliser l'obturation selon l'invention et pour satisfaire aux conditions imposées par l'application envisagée et notamment aux risques de corrosion dans le cas de fluides agressifs.

En particulier, il convient que le rapport des coefficients de dilatation thermique entre le matériau du module et le matériau d'obturation ne soit pas trop grand, la limite supérieure dépendant de la résistance mécanique du matériau du module, de l'épaisseur des parois et de la géométrie du module.

Ainsi, le matériau étanche projeté par le pistolet 22 peut être constitué soit par un oxyde tel que l'alumine, soit par un métal tel que l'aluminium ou le nickel, soit encore par un mélange de métal et d'oxyde.

Le pistolet de projection 22 peut être constitué par un chalumeau oxyacétylénique lorsque le matériau à projeter est relativement fusible, ce qui est notamment le cas lorsqu'il s'agit d'un métal tel que l'aluminium. Un fil de ce métal, dont le diamètre varie entre 2 mm et 3 mm en fonction de la fragilité du module 10, est alors placé dans la flamme du chalumeau et les particules de métal en fusion sont entraînées par un courant d'air comprimé. En outre, l'extrémité du canon de projection 22 est située à une distance de l'extrémité du module comprise entre 12 cm et 18 cm pour l'appareillage utilisé.

Il est également possible de faire appel à la technique du plasma d'arc lorsque les matériaux projetés sont peu fusibles, ce qui est notamment le cas lorsqu'il s'agit d'oxydes métalliques ou de métaux à haut point de fusion.

Comme l'illustre la figure 2, le pistolet de projection 22 est incliné d'un angle α compris entre 18° et 30° par rapport à la direction des canaux du module 10 qui définit l'axe de rotation de ce dernier. Cette inclinaison permet de limiter la pénétration du matériau étanche dans les encoches à une valeur aussi faible que possible. Elle permet aussi de diminuer les chocs mécaniques liés à la projection.

Au cours de la réalisation de l'étape d'obturation proprement dite de l'extrémité du module 10, la projection du matériau d'obturation par le pistolet 22 s'effectue de façon intermittente, chaque période de projection, d'environ 1 seconde (au maximum), étant suivie par une période de refroidissement nettement plus longue, par exemple de 5 secondes à 10 secondes. Cette caractéristique permet l'élimination de la plus grande partie des calories dissipées lors de la projection et permet de résoudre les problèmes liés aux coefficients de dilatation non adaptés des deux matériaux.

La figure 3 représente l'allure de l'extrémité du module 10 après obturation de celle-ci par une couche de matériau étanche 26 projetée à l'aide du pistolet 22. On voit que le dépôt de matériau 26 obture complètement les canaux 14 dans lesquels aucune encoche n'a été réalisée au préalable, et obture superficiellement le bord des encoches 20, de telle sorte que l'accès aux canaux 18 reste possible par les ouvertures réalisées dans les parois latérales du module 10 lors de l'usinage des encoches 20. L'obturation sélective de l'extrémité du module 10 est donc bien réalisée, puisque les canaux 14 sont effectivement obturés alors que l'accès aux canaux 18 reste possible latéralement par les encoches 20. A titre d'illustration, on notera que la couche de matériau 26 déposée par projection comme l'illustre la figure 2 peut présenter une épaisseur comprise entre 1, 5 mm et 2 mm.

Conformément à une deuxième variante de réalisation de l'invention, la première étape consistant à réaliser des encoches préalables est supprimée et remplacée par une étape consécutive à l'étape d'obturation par projection liquide qui demeure inchangée mais est alors appliquée à un module dont l'extrémité est plane. Cette nouvelle étape consiste en un usinage de la couche de matériau déposé par shoopage sur les rangées de canaux qui doivent déboucher à l'extrémité du module. De préférence, l'usinage est réalisé par électroérosion ou à l'aide d'un laser.

Selon une troisième variante de réalisation de l'invention, la réalisation des encoches est également supprimée et remplacée par la mise en place de caches devant les rangées de canaux qui doivent déboucher à l'extrémité du module, pendant l'obturation de cette extrémité par projection liquide. Lorsque les caches sont retirés, l'accès à ces rangées de canaux est libéré alors que les autres rangées sont obturées.

L'obturation sélective des extrémités du module 10 conformément à l'invention est donc effectuée de façon particulièrement simple à partir d'un module monobloc réalisé, par exemple, par filage et permet d'obtenir un module dont les caractéristiques peuvent s'adapter à différentes applications telles que l'échange de chaleur entre deux fluides.

**Revendications**

1. Procédé d'obturation sélective d'au moins une extrémité d'un module alvéolaire (10) comprenant des rangées (12, 16) de canaux parallèles (14, 18) destinées à véhiculer au moins deux fluides différents, comprenant :

— une étape permettant de laisser libre l'accès aux rangées (16) de canaux (18) véhiculant un premier desdits fluides, et

— une étape de dépôt d'un matériau étanche (26) sur au moins une partie de l'extrémité du module, caractérisé en ce que le matériau étanche est déposé par projection liquide pulsée, définissant des périodes de projection courtes entrecoupées de périodes de refroidissement plus longues, l'angle de projection du matériau étanche étant compris entre 18° et 30° par rapport à la direction définie par les canaux.

2. Procédé selon la revendication 1, caractérisé en ce que l'accès aux rangées de canaux (18) véhiculant le premier fluide est ménagé en réalisant des encoches (20) dans les parties de l'extrémité du module correspondant à ces rangées avant de déposer le matériau étanche (26), ces encoches débouchant sur les parois latérales du module de telle sorte que l'accès latéral aux canaux (18) véhiculant le premier fluide est laissé libre alors que les autres canaux (14) sont obturés par le matériau étanche (26).

3. Procédé selon la revendication 1, caractérisé en ce que l'accès aux rangées de canaux (18) véhiculant le premier fluide est ménagé en éliminant par usinage la couche de matériau étanche déposée sur ces rangées, de telle sorte que l'accès aux canaux (18) véhiculant le premier fluide est dégagé alors que les autres canaux (14) sont obturés par le matériau étanche (26).

4. Procédé selon la revendication 1, caractérisé en ce que l'accès aux rangées de canaux (18) véhiculant le premier fluide est ménagé en plaçant des caches devant ces rangées lors du dépôt du matériau étanche (26), de façon à empêcher le dépôt du matériau étanche sur ces rangées, de telle sorte que l'accès aux canaux (18) véhiculant le premier fluide est dégagé alors que les autres canaux (14) sont obturés par le matériau étanche (26).

5. Procédé selon la revendication 2, caractérisé en ce que la largeur des encoches (20) est sensiblement égale à la largeur intérieure des canaux (14, 18).

6. Procédé selon l'une quelconque des revendications 2 ou 5, caractérisé en ce que les encoches (20) sont réalisées par usinage.

7. Procédé selon l'une quelconque des revendications précédentes, caractérisé en ce que les canaux (14, 18) sont de section carrée ou rectangulaire.

8. Procédé selon l'une quelconque des revendications précédentes, caractérisé en ce que le matériau étanche (29) est choisi parmi le groupe comprenant les oxydes métalliques tels que l'alumine, les métaux tels que l'aluminium ou le nickel et les mélanges de ces matériaux.

9. Procédé selon l'une quelconque des revendications précédentes, caractérisé en ce que le module (10) est réalisé en un matériau choisi parmi le groupe comprenant les matériaux minéraux frittés ou non, et notamment les céramiques telles que l'alumine et la cordiérite, et les métaux tels que le nickel.

## Claims

1. Process for selectively closing at least one end of a honeycomb structure (10) comprising rows of parallel channels (14, 18) for carrying at least two different fluids which comprises :
— a stage permitting free access to rows (16) of channels (18) carrying a first fluid, and
— a stage of depositing an impervious material (26) on at least a part of the end of the structure ; characterized in that the impervious material is deposited by pulsed liquid projection comprising short projection periods alternating with longer cooling periods, the angle of projection of the impervious material being from 18 to 30° with respect to the direction defined by the channels.

2. Process according to Claim 1 characterized in that access to the rows of channels (18) carrying the first fluid is provided by forming slots (20) in those parts of the end of the structure corresponding to those rows before deposition of the impervious material (26), said slots opening on the side walls of the structure thereby leaving free access to the channels (18) carrying the first fluid while the other channels (14) are closed by the impervious material.

3. Process according to Claim 1 characterized in that access to the rows of channels (18) carrying the first fluid is provided by removing by machining, the layer of impervious material deposited on these rows, whereby access to the channels (18) carrying the first fluid is open while the other channels (14) are closed by the impervious material (26).

4. Process according to Claim 1 characterized in that access to the rows of channels (18) carrying the first fluid is provided by placing masks over these rows before deposition of the impervious material (26), whereby to prevent deposition of the impervious materials on these rows, so that access to the channels (18) carrying the first fluid is open while the other channels (14) are closed by the impervious material (26).

5. Process according to Claim 2 characterized in that the dimensions of the slots (20) are substantially equal to the interior dimensions of the channels (14, 18).

6. Process according to either of Claims 2 and 5 characterized in that the slots (20) are formed by machining.

7. Process according to any one of the preceding Claims characterized in that the channels (14, 18) have a square or rectangular cross-section.

8. Process according to any one of the preceding Claims characterized in that the impervious material (26) is selected from the group comprising metal oxides such as alumina, metals such as aluminium or nickel, and mixtures of these materials.

9. Process according to any one of the preceding Claims characterized in that the structure (10) is formed of a material selected from the group comprising sintered or non-sintered minerals, and particularly of ceramics such as alumina and cordierite, and metals such as nickel.

## Ansprüche

1. Verfahren zum selektiven Verschließen zumindest eines Abschlußendes einer Zelleneinheit (10), die zum Transport zumindest zweier unterschiedlicher Flüssigkeiten Sätze (12, 16) von parallelen Kanälen (14, 18) aufweist, wobei in einem Verfahrensschritt es ermöglicht wird, den Zufluß zu den Kanalsätzen (16, 18) für eine erste der Flüssigkeiten freizulassen und in einem Verfahrensschritt ein Abdichtmaterial (26) auf zumindest einem Teil des Abschlußendes der Einheit abgelegt wird, dadurch gekennzeichnet, daß das Abdichtmaterial durch pulsierendes Spritzen eines flüssigen Materials abgelegt wird, und zwar in kurzen Spritzperioden, die durch längere Abkühlperioden unterbrochen wurden, und daß der Spritzwinkel des Abdichtmaterials zwischen 18° und 30° in bezug zu der durch die Kanäle definierten Richtung liegt.

2. Verfahren nach Anspruch 1, dadurch gekennzeichnet, daß der Zufluß zu den Kanalsätzen (18) für die erste Flüssigkeit angebracht wird, indem vor dem Ablegen des Abdichtmaterials (26) die Teile des diesen Kanalsätzen entsprechenden Außenendes der Zelleneinheit mit Nuten (20) versehen werden, und daß diese Nuten in den Seitenwänden der Zelleneinheit eine Öffnung freigeben, derart, daß ein seitlicher Zufluß zu den Kanälen (18) für die erste Flüssigkeit freigelassen wird, während die anderen Kanäle (14) durch das Abdichtmaterial (26) verschlossen werden.

3. Verfahren nach Anspruch 1, dadurch gekennzeichnet, daß der Zufluß zu den Kanalsätzen (18) für die erste Flüssigkeit angebracht wird, indem durch maschinelle Bearbeitung die auf diese Kanalsätze abgelegte Schicht des Abdichtmaterials entfernt wird, derart, daß der Zufluß zu den Kanälen (18) für die erste Flüssigkeit freigelegt wird, während die anderen Kanäle (14) durch das Abdichtmaterial (26) verschlossen bleibt.

4. Verfahren nach Anspruch 1, dadurch gekennzeichnet, daß der Zufluß zu den Kanalsätzen (18) für die erste Flüssigkeit angebracht wird, indem während der Ablage des Abdichtmaterials (26) vor diesen Kanalsätzen Abdeckungen plaziert gehalten werden, derart, daß die Ablage des Abdichtmaterials auf diesen Kanalsätzen verhindert wird, so daß der Zufluß zu den Kanälen (18) für die erste Flüssigkeit freigehalten wird, während die anderen Kanäle (14) durch das Abdichtmaterial (26) verschlossen werden.

5. Verfahren nach Anspruch 2, dadurch gekennzeichnet, daß die Breite der Nuten (20) der Innenbreite der Kanäle (14, 18) entspricht.

6. Verfahren nach einem der Ansprüche 2 und 5, dadurch gekennzeichnet, daß die Nuten (20) durch maschinelle Bearbeitung hergestellt werden.

7. Verfahren nach einem der vorhergehenden Ansprüche, dadurch gekennzeichnet, daß die Kanäle (14, 18) einen quadratischen bzw. rechteckigen Querschnitt aufweisen.

8. Verfahren nach einem der vorhergehenden Ansprüche, dadurch gekennzeichnet, daß das Abdichtmaterial (26) aus der Gruppe der Metalloxide, z. B. Aluminiumoxid, der Metalle, z. B. Aluminium oder Nickel, oder der Legierungen aus diesen Materialien ausgewählt wird.

9. Verfahren nach einem der vorhergehenden Ansprüche, dadurch gekennzeichnet, daß die Zelleneinheit (10) aus einem Material hergestellt ist, das aus der Gruppe der gesinterten oder ungesinterten Mineralien, insbesondere der Keramiken, wie Aluminiumoxid und Cordierit, sowie der Metalle, wie Nickel, ausgewählt wird.

FIG.1

FIG. 2

FIG. 3